(19) Europäisches Patentamt
European Patent Office
Office européen des brevets

(11) EP 0 891 108 B1

(12) # EUROPÄISCHE PATENTSCHRIFT

(45) Veröffentlichungstag und Bekanntmachung des Hinweises auf die Patenterteilung:
**14.01.2004 Patentblatt 2004/03**

(51) Int Cl.⁷: **H04Q 3/66**

(21) Anmeldenummer: **98112882.0**

(22) Anmeldetag: **10.07.1998**

(54) **Verfahren und Vorrichtung zur Generierung von Teil-Routing-Tabellen in einem Telekommunikationsnetzwerk**

Method and device for generating partial routing tables in a telecommunications network

Procédé et dispositif pour générer des tables d'acheminement partielles dans un réseau de télécommunications

(84) Benannte Vertragsstaaten:
**DE FR GB IT**

(30) Priorität: **10.07.1997 DE 19729629**

(43) Veröffentlichungstag der Anmeldung:
**13.01.1999 Patentblatt 1999/02**

(73) Patentinhaber: **SIEMENS AKTIENGESELLSCHAFT**
**80333 München (DE)**

(72) Erfinder:
- **Hillermeier, Claus, Dr.**
  **80637 München (DE)**
- **Nagel, Klaus, Dr.**
  **81669 München (DE)**
- **Spahl, Gerd-Dieter**
  **82178 Puchheim (DE)**

(56) Entgegenhaltungen:
**EP-A- 0 566 209** **DE-A- 4 308 512**

- **HILLERMEIER ET AL: "OPTIMAL ROUTING IN PRIVATE NETWORKS USING GENETIC ALGORITHMS" PROCEEDINGS ISS, Bd. 1, 21. - 26. September 1997, Seiten 523-531, XP000720560 Toronto (CA)**
- **NOBUYUKI OBA ET AL: "An adaptive network routing method by electrical-circuit modeling" PROCEEDINGS IEEE INFOCOM, Bd. 2, 28. März 1993 - 1. April 1993, Seiten 586-592, XP000399038 San Francisco (US)**
- **G. ALARI ET AL: "Fault-tolerant hierarchical routing" IEEE INTERNATIONAL PERFORMANCE, COMPUTING AND COMMUNICATIONS CONFERENCE, 5. - 7. Februar 1997, Seiten 159-165, XP002079780 NewYork (US)**
- **GARCIA-LUNA-ACEVES J J ET AL: "A PATH-FINDING ALGORITHM FOR LOOP-FREE ROUTING" IEEE / ACM TRANSACTIONS ON NETWORKING, Bd. 5, Nr. 1, Februar 1997, Seiten 148-160, XP000678923**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft die Generierung mindestens einer Teil-Routing-Tabelle zwischen Quellknoten und Zielknoten in einem Telekommunikationsnetzwerk.

Ein Telekommunikationsnetzwerk weist mindestens einen Quellknoten und mindestens einen Zielknoten und eine beliebige Anzahl weiterer Knoten auf. Die Kommunikation, d.h. die Übertragung von Daten, erfolgt von dem Quellknoten über die weiteren Knoten zu dem Zielknoten.

Dabei gilt es für die Übertragung der Daten ein möglichst optimales Routing zu gewährleisten, um eine möglichst schnelle und verlustarme Kommunikation zu ermöglichen.

Unter Routing ist im weiteren zu verstehen, einen Weg von dem Quellknoten zu dem Zielknoten über die weiteren Knoten zu ermitteln und die Daten über diesen Weg zu leiten, so daß die Daten von dem Quellknoten zu dem Zielknoten gelangen.

Unter einer Teil-Routing-Tabelle ist im folgenden bei zielknotenabhängigem Routing die Gesamtheit der Routingsinformation, d.h. alle Routingvektoren, für einen Zielknoten zu verstehen. Bei quellknoten- und zielknotenabhängigem Routing ist unter einer Teil-Touting-Tabelle die Gesamtheit der Routingsinformation, d.h. alle Routingvektoren, für ein Quellknoten-Zielknoten-Paar zu verstehen.

Aus [1] ist eine Routingstrategie bekannt, die als "Fixed-Alternative Routing" (FAR) bezeichnet wird. Bei diesem Verfahren ist (sind) in jedem Knoten i des Telekommunikationsnetzwerks eine (oder mehrere) Liste(n), die auch als Routingvektor(en) bezeichnet werden, gespeichert, deren Einträge aus Nachbarknoten des jeweiligen Knotens bestehen. Ein bis zu diesem Knoten geführter Verbindungsweg wird zum ersten freien Knoten dieses Vektors fortgesetzt.

Unter einem Nachbarknoten eines Knotens ist ein Knoten zu verstehen, der mit dem Knoten direkt verbunden ist.

Für festes ("fixed") Routing ohne Alternativwege sind Algorithmen zum Finden der k kürzesten und schleifenfreien Wege bekannt. Für FAR ist Schleifenfreiheit aufgrund der Routingalternativen an jedem Knoten schwerer zu überprüfen und sicherzustellen. Aus [2] ist eine Methode zum Generieren schleifenfreier Teil-Routing-Tabellen in einem nichthierarchischen Telekommunikationsnetzwerk bekannt, die für quell- und zielabhängiges Routing anwendbar ist. Dabei werden mittels bekannter Verfahren aus der Graphentheorie k kürzeste und jeweils in sich schleifenfreie Wege (zwischen Quellknoten und Zielknoten) erzeugt. Bereits während der Suche nach den kürzesten Wegen wird die Schleifenfreiheit der durch Zusammensetzen dieser Wege entstehenden Teil-Routing-Tabellen als zusätzliche Randbedingung mitgeführt.

Nachteilig an dem aus [2] bekannten Verfahren ist, daß nur eine Teil-Routing-Tabelle für einen Weg generiert wird. Eine Generierung unterschiedlicher Varianten, die eine Optimierung des Routings durch optimale Kombination von Teil-Routing-Tabellen zur einer Gesamt-Routing-Tabelle (die für sämtliche potentiellen Quellknoten und Zielknoten das Routing festschreibt) ermöglichen, ist mit diesem Verfahren nicht möglich. Ein weiterer Nachteil des bekannten Verfahrens ist in dessen Komplexität zu sehen, was zu einem erhöhten Rechenzeitbedarf zur Durchführung des Verfahrens führt.

Für hierarchische Telekommunikationsnetzwerke mit FAR sind keine Methoden zur Konstruktion schleifenfreier Routing(oder Teil-Routing-)Tabellen bekannt.

Unter einem hierarchischen Telekommunikationsnetzwerk ist ein Telekommunikationsnetzwerk mit folgenden Eigenschaften zu verstehen:

- Das Telekommunikationsnetzwerk ist in hierarchische Ebenen aufgeteilt. Die Quellknoten und die Zielknoten liegen auf der niedrigsten Hierarchieebene.
- Jeder Knoten hat mindestens eine Verbindung zu einem Knoten der nächsthöheren Hierarchieebene.
- Über die oberste Hierarchieebene lassen sich ein Quellknoten und ein Zielknoten stets miteinander verbinden (hierarchische Distanz zweier Knoten).
- Routing darf anschaulich nur in Form eines umgekehrten "U" erfolgen, d.h. einmal die Hierarchiestruktur (evtl. nur ein Stück) nach oben und zurück. Ein "Zick-Zack"-Routing zwischen Hierarchieebenen ist auszuschließen.

Ein Beispiel für ein hierarchisches Telekommunikationsnetzwerk ist das öffentliche Telekommunikationsnetzwerk [3].

Somit liegt der Erfindung das Problem zugrunde, ein Verfahren und eine Vorrichtung zur Generierung mindestens einer Teil-Routing-Tabelle zwischen mindestens einem Quellknoten und mindestens einem Zielknoten in einem Telekommunikationsnetzwerk zu schaffen, mit denen es möglich ist, für jeden Zielknoten (bzw. für jedes Quellknoten-Zielknoten-Paar) mehrere unterschiedliche Varianten schleifenfreier Teil-Routing-Tabellen zu erzeugen.

Das Problem wird durch das Verfahren gemäß Patentanspruch 1 und durch die Vorrichtung gemäß Patentanspruch 5 gelöst.

Bei dem Verfahren zur rechnergestützten Generierung mindestens einer Teil-Routing-Tabelle zwischen mindestens einem Quellknoten und mindestens einem Zielknoten in einem Telekommunikationsnetzwerk mit Knoten, die zumindest zum Teil über Kanten mit dem Quellknoten und/oder mit dem Zielknoten verbunden sind, wird allen Knoten, einschließlich dem Quellknoten und dem Zielknoten, ein Potentialwert zugeordnet. Die Zuordnung erfolgt derart, daß dem Zielknoten der niedrigste Potentialwert zugeordnet wird und beginnend mit dem Zielknoten für alle Knoten folgende Verfahrensschritte durchgeführt werden:

- - es wird ein Knoten ausgewählt, dem noch kein Potentialwert zugeordnet wurde, und der mit mindestens einem Knoten verbunden ist, dem ein Potentialwert zugeordnet wurde,
- - dem ausgewählten Knoten wird ein Potentialwert zugeordnet, der größer ist als der Potentialwert, der dem verbundenen Knoten zugeordnet wurde.

Die Teil-Routing-Tabelle ergibt sich aus einer Menge von Knoten, die ausgehend von dem Quellknoten über Knoten mit monoton fallenden Potentialwerten zu dem Zielknoten führen.

Die Vorrichtung zur Generierung mindestens einer Teil-Routing-Tabelle zwischen mindestens einem Quellknoten und mindestens einem Zielknoten in einem Telekommunikationsnetzwerk mit Knoten, die zumindest zum Teil über Kanten mit dem Quellknoten und/oder mit dem Zielknoten verbunden sind, weist eine Prozessoreinheit auf, die derart eingerichtet ist, daß

- jedem Knoten, dem Quellknoten und dem Zielknoten ein Potentialwert zugeordnet wird,
- die Zuordnung derart erfolgt, daß dem Zielknoten der niedrigste Potentialwert zugeordnet wird und beginnend mit dem Zielknoten für alle Knoten folgende Verfahrensschritte durchgeführt werden:
  - - es wird ein Knoten ausgewählt, dem noch kein Potentialwert zugeordnet wurde, und der mit mindestens einem Knoten verbunden ist, dem ein Potentialwert zugeordnet wurde,
  - - dem ausgewählten Knoten wird ein Potentialwert zugeordnet, der größer ist als der Potentialwert, der dem verbundenen Knoten zugeordnet wurde, und
- die Teil-Routing-Tabelle sich ergibt aus einer Menge von Knoten, die ausgehend von dem Quellknoten über Knoten mit monoton fallenden Potentialwerten zu dem Zielknoten führen.

Die Erfindung ist für zwei Ausprägungen von FAR anwendbar:

- FAR, bei dem das Routing nur aufgrund des Zielknotens, nicht aufgrund des Quellknotens erfolgt. Bei diesem zielabhängigen Routing existiert an jedem weiteren Knoten pro Zielknoten genau ein Routingvektor.
- FAR, bei dem das Routing jeweils spezifisch für Zielknoten und Quellknoten erfolgt. Hierfür ist an jedem weiteren Knoten pro Quellknoten-Zielknoten-Paar ein eigener Routingvektor gespeichert. Mit diesem quell- und zielabhängigen Routing lassen sich aufgrund seiner Flexibilität mehr Alternativwege realisieren.

Durch die Erfindung ist es möglich, für jeden Zielknoten (bzw. für jedes Quell-Zielknoten-Paar) mehrere unterschiedliche Varianten schleifenfreier Teil-Routing-Tabellen zu erzeugen. Dadurch wird es möglich, Routingoptimierung zu erreichen, indem nach optimalen Kombinationen von Teil-Routing-Tabellen zu einer Gesamt-Routing-Tabelle gesucht wird

Die Erfindung ist geeignet sowohl für

- hierarchische Telekommunikationsnetzwerke, bei denen das Routing durch die Beachtung der Knotenhierarchie eingeschränkt ist, als auch für
- nichthierarchische Netze, bei denen solche Hierarchieeinschränkungen nicht existieren.

Anschaulich kann die Erfindung darin gesehen werden, daß jedem Knoten des Telekommunikationsnetzwerks ein Potential zugeordnet wird und daß, in Analogie zum Fluß eines elektrischen Stroms aufgrund eines elektrischen Potentialunterschiedes, Routing jeweils nur zu einem Knoten mit niedrigerem Potential erfolgt, wodurch die Schleifenfreiheit gewährleistet wird.

Vorteilhafte Weiterbildungen der Erfindung ergeben sich aus den abhängigen Ansprüchen.

In einer Weiterbildung ist es vorteilhaft, daß einem für die Potentialzuordnung ausgewählten Knoten ein Potentialwert zugeordnet wird, der größer ist als alle bereits vergebenen Potentialwerte. Damit wird das Verfahren weiter vereinfacht.

In einer weiteren Weiterbildung, bei dem das Telekommunikationsnetzwerk mehrere Hierarchieebenen aufweist, die jeweils mindestens einen Knoten, Quellknoten oder Zielknoten aufweisen, erfolgt die Zuordnung hierarchieebenenweise, ausgehend von dem Zielknoten zunächst bis zur obersten Hierarchieebene und anschließend zurück zur untersten Hierarchieebene. Beim Wechsel zu einer anderen Hierarchieebene werden die Potentialwerte jeweils erhöht. Auf diese Weise wird auch in einem hierarchischen Telekommunikationsnetzwerk eine Bildung schleifenfreier Teil-Routing-Tabellen auf einfachere Weise möglich.

Ausführungsbeispiele der Erfindungen sind in den Figuren dargestellt und werden im weiteren näher erläutert.

Es zeigen

Figur 1 eine Skizze eines Telekommunikationsnetzwerks mit einem Knoten, dem ein Routingvektor zugeordnet ist;
Figur 2 eine Skizze eines Telekommunikationsnetzwerks mit Potentialzuordnung bei zielabhängigem Routing;
Figur 3 eine Skizze eines hierarchischen Telekommunikationsnetzwerks mit Potentialzuordnung bei zielabhängigem Routing;
Figur 4 eine Skizze eines Telekommunikationsnetzwerks, in dem eine Anologie zu einem elektrischen Netzwerk dargestellt ist;
Figur 5 ein Ablaufdiagramm, in dem die einzelnen Verfahrensschritte des Verfahrens dargestellt sind;
Figur 6 eine Skizze eines Rechners, mit dem mindestens eine Teil-Routing-Tabelle erzeugt wird.

Figur 1 zeigt eine Skizze eines Telekommunikationsnetzwerks TN mit Quellknoten Qe (e = 1, ..., n) und Zielknoten Zf (f = 1, ..., m). Ein Quellknoten Qe bzw. ein Zielknoten Zf repräsentiert jeweils ein Kommunikationsendgerät, z.B. ein Telefon oder ein Telefaxgerät oder auch einen Rechner, oder diejenige Vermittlungseinheit des Telekommunikationsnetzwerks TN, an die das betreffende Kommunikationsendgerät angeschlossen ist.

Das Telekommunikationsnetzwerk TN weist ferner Vermittlungseinheiten repräsentierende Knoten KNl (1 = 1,..., s) auf.

Zur einfacheren Darstellung werden sowohl die Quellknoten Qe, die Zielknoten Zf als auch die Knoten KNl mit einem ersten Index i oder einem zweiten Index j gekennzeichnet. Ein Knoten wird dann mit dem Index i indiziert, wenn von dem Knoten eine Verbindung zu einem Nachbarknoten, der mit dem zweiten Index j gekennzeichnet wird, ausgeht.

Die Knoten KNi sind über Kanten Kij miteinander verbunden, wobei die Orientierung der Kante Kij derart ist, daß die Verbindung von Knoten i zu dem Knoten j gerichtet ist. Jedem Knoten KNi ist ein Routingvektor Ri zugeordnet und gespeichert, in dem Nachbarknoten des Knotens KNi angegeben sind, mit denen der Knoten KNi verbunden ist. Für den in Figur 1 mit KN1 bezeichneten Knoten ergibt sich aus der Topologie des Telekommunikationsnetzwerks TN, daß der Knoten KN1 mit Nachbarknoten a, b, c verbunden ist. Wenn der Routingvektor Ri gegeben ist durch

$$Ri = \begin{pmatrix} a \\ b \\ c \end{pmatrix},$$

so bedeutet dies, daß die in dem Knoten KNi ankommenden Daten an die Knoten a, b, c weitergeleitet werden können, und zwar mit von a nach c abnehmender Präferenz.

Bei zielknotenabhängigem Routing ist jedem Knoten KNi des Telekommunikationsnetzwerks TN jeweils pro Zielknoten ZF ein spezifischer Routingvektor Ri zugeordnet. Bei quellknoten- und zielknotenabhängigem Routing ist jedem Knoten KNi des Telekommunikationsnetzwerks TN jeweils pro Quellknoten-Zielknoten-Paar ein spezifischer Routingvektor Ri zugeordnet.

Jedem Knoten KNi des Telekommunikationsnetzwerks TN ist ein Routingvektor Ri zugeordnet.

Die Gesamtheit aller Routingvektoren Ri des Telekommunikationsnetzwerks TN wird als Routing-Tabelle bezeichnet. Eine Teilmenge der Routing-Tabelle wird im weiteren als Teil-Routing-Tabelle bezeichnet. Eine Teil-Routing-Tabelle umfaßt bei zielabhängigem FAR die Gesamtheit der für einen bestimmten Zielknoten Zf spezifischen Routingvektoren Ri, bei quell- und zielabhängigem FAR die Gesamtheit der für ein Quellknoten-Zielknoten-Paar spezifischen Routingvektoren Ri.

Die Routing-Tabelle ergibt sich somit aus den gebildeten Teil-Routing-Tabellen.

In Figur 5 ist ein Ablaufdiagramm dargestellt mit den einzelnen Verfahrensschritten zur Erzeugung einer schleifenfreien Teil-Routing-Tabelle.

In einem ersten Schritt 501 wird ein Zielknoten Zf ausgewählt. Dem Zielknoten Zf wird ein Zielpotentialwert 0 zugeordnet (Schritt 502).

In einem weiteren Schritt 503 wird ein Knotens KNi ausgewählt, dem noch kein Potentialwert zugeordnet

wurde, und der mit mindestens einem Knoten verbunden ist, dem bereits ein Potentialwert zugeordnet wurde.

Dem ausgewählten Knoten wird ein Potentialwert zugeordnet, der größer ist als der Potentialwert, der dem verbundenen Knoten zugeordnet wurde (Schritt 504). Ist der ausgewählte Knoten KNi mit mehreren Knoten KNi verbunden, denen bereits ein Potentialwert zugeordnet wurde, so ist der kleinste dieser zugeordneten Potetialwerte durch den neu zu vergebenden Potentialwert zu übertreffen.

In einem Überprüfungsschritt 505 wird überprüft, ob jedem Knoten KNi des Telekommunikationsnetzwerks TN ein Potentialwert zugeordnet wurde. Ist dies nicht der Fall, existieren demnach noch Knoten KNi ohne zugeordneten Potentialwert, so wird zu Schritt 503 verzweigt und es wird ein weiterer Knoten ohne zugeordneten Potentialwert ausgewählt. Ist jedem Knoten KNi ein Potentialwert zugeordnet, so wird in einen Verfahrensschritt 506 verzweigt, in dem mindestens eine Teil-Routing-Tabelle gebildet wird.

Anschaulich erfolgt die Zuordnung der Potentialwerte derart, daß

- den niedrigsten Potentialwert der Zielknoten Zf aufweist, da es sonst passieren kann, daß zu einem Knoten KNi geroutet wird, dessen Potential niedriger ist als das des Zielknotens Zf und von dem aus der Zielknoten Zf nicht mehr erreichbar ist,
- 'Tote Enden', d.h. Knoten KNi, die nicht der Zielknoten Zf sind und von denen aus keine Verbindung mehr zu einem Knoten niedrigeren Potentials besteht, nicht auftreten dürfen, (Streng genommen folgt aus dieser Bedingung die vorangegangene Bedingung), und
- wenn verschiedenen Knoten KNi der gleiche Potentialwert zugeordnet wird, kann das obige Routing-Wahlkriterium nach der Größe der Potentialdifferenz zu Mehrdeutigkeiten führen. Diese Situation läßt sich entweder dadurch vermeiden, daß von vornherein jeder Potentialwert nur an einen einzigen Knoten KNi vergeben wird, oder daß gleiche Potentialwerte durch einen (z.B. stochastischen) kleinen additiven Störterm verschieden gemacht werden.

Eine Teil-Routing-Tabelle ergibt sich aus der Menge von Knoten KNi, die ausgehend von dem Quellknoten Qe über Knoten KNi mit monoton fallenden Potentialwerten zu dem Zielknoten Zf führen.

Anschaulich entspricht diese Vorgehensweise in Analogie zum Fluß eines elektrischen Stromes aufgrund eines elektrischen Potentialunterschiedes oder zum Fließen von Wasser aufgrund eines Unterschiedes im Gravitationspotential einem Routing jeweils nur zu einem Knoten KNi mit niedrigerem Potential.

Um aus der Menge von Nachbarknoten mit niedrigerem Potential einen Routingeintrag (bzw. die Einträge des Routingvektors Ri und ihre Reihenfolge) zu wählen, bedarf es eines zusätzlichen Kriteriums. Eine Möglichkeit ist die zufällige Auswahl aus der Menge der Nachbarknoten mit niedrigerem Potential.

Das Routing in Richtung des Potentialgefälles erzwingt die Schleifenfreiheit, weil Daten nie zu einem bereits passierten Knoten KNi zurückgeroutet werden können.

Im folgenden werden Beispiele des Verfahrens für verschiedene Routingarten beschrieben.

### Rein zielabhängiges Routing

Für jeden Zielknoten Zf sind folgende Schritte durchzuführen:

Allen Knoten KNi werden gemäß folgendem Algorithmus Potentialwerte zugeordnet:

1. Beginne mit dem Zielknoten Zf: Potentialwert = 0;
2. Führe so lange, bis allen Knoten KNi ein Potential zugewiesen wurde, folgende Schritte durch:

    a) Wähle einen Knoten KNi aus, dem bereits ein Potential zugewiesen wurde.
    b) Wähle einen weiteren Knoten aus, der mit dem ausgewählten Knoten KNi direkt verbunden ist und dem noch kein Potentialwert zugeordnet wurde. Falls dies nicht möglich ist, gehe zurück zu a).
    c) Ordne dem weiteren Knoten den Potentialwert { (Maximum bereits zugeordneter Potentiale) + 1 } zu.

Ein Beispiel des obigen Verfahrens zur Potentialzuordnung ist in seinem Ergebnis in Figur 2 gezeigt.

### Quell- und zielabhängiges Routing

Das Verfahren ist entsprechend dem Verfahren für rein zielabhängiges Routing, mit folgenden zwei Änderungen:

In dem Schritt 1. werden sowohl dem Zielknoten Zf der Potentialwert 0 zugeordnet als auch dem Quellknoten Qe der Potentialwert ∞ (in der praktischen Umsetzung: eine sehr große Zahl) gesetzt.

In dem Schritt 2.a) wird der Quellknoten Qe ausgenommen, da sonst unsinnige Zuordnungen wie Quelle (∞)-----X(∞ +1) vorkommen können.

Das Verfahren der Potentialzuordnung ist für jedes Quellknoten-Zielknoten-Paar separat durchzuführen.

**Hierarchisches Telekommunikationsnetzwerk TN**

Aufgrund der Hierarchieeinschränkung wird eine Variante des oben beschriebenen Verfahrens bei einem hierarchischen Telekommunikationsnetzwerk TN eingesetzt:

Die Potentialzuordnung erfolgt Hierarchieebenenweise.

Dabei geht man, ausgehend vom Zielknoten Zf (Teilnehmerebene), zunächst bis zur obersten Hierarchieebene hoch ("1. Durchlauf") und anschließend wieder zur Teilnehmerebene (Ebene auch des Quellknotens Qe) zurück ("2. Durchlauf").

Beim 1. Durchlauf wird pro Hierarchieebene nur einer Teilmenge der Knoten KNi ein Potentialwert zugeordnet. Jeder Knoten KNi dieser Teilmenge muß mit mindestens einem der potentialbehafteten Knoten KNi der Ebene darunter verbunden sein. Die Auswahl der Teilmenge kann zufällig oder aufgrund anderer Kriterien (z.B. aufgrund des Kennzahlenweges) erfolgen.

Der Potentialwert wird, wie schon oben beschrieben, pro Knoten um den Wert 1 erhöht. Eine solche Zuordnung erlaubt Routing innerhalb einer Hierarchieebene.

Anschließend geht man von der obersten Ebene wieder zurück, wobei in jeder Ebene zunächst alle Anlagen ein Potential haben müssen, bevor man eine Ebene weiter nach unten geht.

Eine Beispielzuordnung von Potentialwerten nach obigem Verfahren zeigt Figur 3.

Es sei angemerkt, daß dieses Verfahren sowohl für rein zielabhängiges wie auch für quell- und zielabhängiges Routing anwendbar ist. Bei rein zielabhängigem Routing ist die Zuordnungsprozedur pro Zielknoten Zf nur einmal durchzuführen (siehe Figur 3). Bei quell- und zielabhängigem Routing kann die Auswahl der Knotenteilmengen beim 1.Durchlauf jeweils spezifisch für ein Quellknoten-Zielknoten-.Paar durchgeführt werden.

In Figur 6 ist ein Rechner R dargestellt, mit dem das oben beschriebene Verfahren durchgeführt wird. Der Rechner R weist einen Prozessor P sowie einen Speicher SP auf, der über einen Bus BU mit dem Prozessor P verbunden ist.

In dem Speicher SP sind die einzelnen Routingvektoren Ri gespeichert. Der Prozessor P ist derart programmiert, daß die oben beschriebenen Verfahren durchgeführt werden können. Ferner ist der Rechner R mit einem Bildschirm BS sowie mit einer Tastatur TA und einer Computer-Maus MA gekoppelt.

Im weiteren werden Alternativen zu den oben beschriebenen Ausführungsbeispielen dargestellt:

Der Zielpotentialwert ist allgemein beliebig wählbar, muß nur das Minimum aller Potentialwerte in dem Telekommunikationsnetzwerk TN sein.

Weitere mögliche Auswahlkriterien für den einen Routingeintrag aus der Menge von Nachbarknoten mit niedrigerem Potential (bzw. den Einträgen des Routingvektors Ri und ihre Reihenfolge) sind:

- Ordnung der Nachbarknoten mit niedrigerem Potential nach ihrem "Abstand" zum Zielknoten Zf, d.h. nach der Anzahl der Knoten KNi, die beim kürzesten Weg zum Zielknoten Zf zwischen dem Knoten KNi und dem Zielknoten Zf liegen. Der Knoten KNi mit dem kleinsten Abstand ist der Ersteintrag des Routingvektors Ri;
- Ordnung der Nachbarknoten mit niedrigerem Potential nach ihrer Potential-Differenz zum aktuellen Knoten KNi (größte Differenz zuerst).

Es sind auch noch weitere Kriterien möglich. Beispielsweise gibt die im weiteren beschriebene Methode, Knotenpotentiale durch die (virtuelle) Umformung des Telekommunikationsnetzes TN in ein elektrisches Widerstandsnetzwerk zu gewinnen, ein weiteres/alternatives Auswahlkriterium für Routingeinträge (und ihre Reihenfolge) an die Hand, nämlich die Stärke des in Richtung des Nachbarknotens fließenden Stromes, wie im weiteren erläutert wird.

Grundidee bei dieser Variante ist die Analogie des Telekommunikationsnetzes TN zu einem elektrischen Widerstandsnetzwerk. Die Topologie des Telekommunikationsnetzes TN wird in ein elektrisches Widerstandsnetzwerk übersetzt, indem in jede direkte Verbindungsleitung ein virtueller Widerstand R (bzw. der reziproke Wert, der elektrische Leitwert) eingefügt wird (vgl. Figur 4).

Das Potential des Zielknotens Zf wird auf den Wert 0 gesetzt und eine Spannung zwischen Quellknoten Qe und Zielknoten Zf angelegt, so daß ein Gesamtstrom der Stärke 1 vom Quellknoten Qe zum Zielknoten Zf fließt. Unter Anwendung des Ohmschen Gesetzes erhält man die Knotenpotentiale $U_i$ als Lösung eines linearen Gleichungssystems (Kirchhoffsche Knotenregel):

Knotenregel für i. ten Knoten:

$$\sum_{j \neq i} L_{ij}\left(U_i - U_j\right) = \begin{cases} 1, & \text{falls } i = \text{Quelle} \\ -1, & \text{falls } i = \text{Ziel} \\ 0 & \text{sonst} \end{cases},$$

wobei $L_{ij} = L_{ji}$ der Leitwert der Verbindung zwischen Knoten i und j ist. Falls eine solche Verbindung nicht existiert, ist $L_{ij} = 0$ zu setzen.

Auf Basis der auf diese Weise berechneten Knotenpotentiale kann man nun mittels einer der in oben aufgeführten Regeln die Routingvektoren Ri generieren.

Das "Stromnetz-Analogie-Verfahren" ermöglicht aber noch eine alternative Methode, die sich die Information der (durch die einzelnen Verbindungen fließenden) Stromstärken zunutze macht. Die Stromverteilung, die aus den Knotenpotentialen durch Anwendung des Ohmschen Gesetzes folgt, kann durch folgende Vorschrift in ein Routing übersetzt werden:

Ordne an jedem Knoten KNi, der nicht Zielknoten Zf ist, die ausgehenden Ströme der Größe nach und trage die entsprechenden Nachbarknoten in dieser Reihenfolge in die Routingliste des Knotens KNi ein. Da Ströme nur in Richtung niedrigerer Potentiale fließen, ist so die Schleifenfreiheit ebenfalls gewährleistet.

Bei der Übersetzung der Topologie des Telekommunikationsnetzwerks TN in ein elektrisches Widerstandsnetzwerk können die virtuellen Widerstände R aufgrund folgender (alternativ anzuwendenden) Kriterien gewählt werden:

- stochastisch
- alle Leitwerte gleich (→ kürzester Weg wird angestrebt)
- Leitwerte proportional (oder nichtlineare, monoton wachsende Funktion) zu den Bündelstärken der Knotenverbindungen.

Bei Anwendung der beiden letzten Kriterien kann man durch Aufprägen einer additiven stochastischen Störung erreichen, daß unterschiedliche Routing-Teil-Tabellen erzeugt werden.

Das "Stromnetz-Analogie-Verfahren" läßt sich auch bei rein zielabhängigem Routing anwenden. Hierfür wird der Netztopologie ein virtueller Quellknoten Qe hinzugefügt, der zu allen Knoten KNi außer dem Zielknoten Zf eine direkte Verbindungsleitung besitzt. Dieser Quellknoten Qe wird auf das positive Potential U gesetzt.

Für die Wahl der Leitwerte in den Verbindungen zum virtuellen Quellknoten Qe kommen die oben beschriebenen Kriterien in Frage. Eine Alternative ist, den Leitwert zwischen dem virtuellen Quellknoten Qe und dem Knoten KNi proportional (oder gemäß nichtlinearem Zusammenhang) zum Verkehrsangebot für das Knotenpaar (KNi, Zielknoten Zf) zu wählen.

Zur Auswahl eines Knotens aus der Menge derjenigen Knoten, die selber bereits einen Potentialwert und die mindestens einen Nachbarknoten ohne Potential haben (im folgenden 'Auswahlmenge' genannt), können mehrere alternative Auswahlkriterien eingesetzt werden:

- Stochastische Wahl. In dieser Variante kann das Verfahren durch jeweils neue Initialisierung des Zufallsgenerators immer wieder unterschiedliche schleifenfreie Teil-Routing-Tabellen generieren.
- Wähle als Knoten denjenigen Knoten der Auswahlmenge mit dem niedrigsten Potential.
- Lege über die Auswahlmenge eine Wahrscheinlichkeitsverteilung, die ihren höchsten Wert beim Knoten mit dem niedrigsten Potential annimmt. Würfle den Knoten entsprechend dieser Wahrscheinlichkeitsverteilung.

Die beiden ersten Varianten ergeben sich als entartete Spezialfälle der dritten Variante.

Alternativ kann die Wahrscheinlichkeitsverteilung auch nach dem Abstand der Knoten zum Zielknoten Zf ausgerichtet werden, d.h. ihren höchsten Wert bei demjenigen Knoten KNi annehmen, der den geringsten Abstand zum Zielknoten Zf hat.

Eine alternative Möglichkeit zur Potentialzuordnung bei einem hierarchischen Telekommunikationsnetzwerk TN ist darin zu sehen, daß beim 1. Durchlauf alle ausgewählten Knoten einer Ebene jeweils auf das gleiche Potential gesetzt werden. Beim Übergang zur nächsthöheren Ebene wird das Potential um den Wert 1 erhöht. Diese Zuordnung vermeidet Routing innerhalb einer Ebene über mehrere Knoten.

Anschaulich kann die Erfindung darin gesehen werden, daß jedem Knoten des Telekommunikationsnetzwerks ein Potential zugeordnet wird und daß, in Analogie zum Fluß eines elektrischen Stroms aufgrund eines elektrischen Potentialunterschiedes, Routing jeweils nur zu einem Knoten mit niedrigerem Potential erfolgt, wodurch die Schleifenfreiheit gewährleistet wird.

Im Rahmen dieses Dokuments wurden folgende Veröffentlichungen zitiert:

[1] A. Girard, Routing and Dimensioning in Circuit-Switched Networks, Addison-Wesley, S. 35 - 37, 1990

[2] H. Hartmann, H. He, Z. Bai, D. Weber, Engineering and Routing for Modular Private ISDNs: Models, New Concepts, Fast Algorithms and Advanced Tools, Proceedings of Networks '96, Sydney, Australia, 1996

[3] A. Girard, Routing and Dimensioning in Circuit-Switched Networks, Addison-Wesley, S. 37 - 39, 1990

## Patentansprüche

1. Verfahren zur rechnergestützten Generierung mindestens einer Teil-Routing-Tabelle zwischen mindestens einem Quellknoten (Qe) und mindestens einem Zielknoten (ZF) in einem Telekommunikationsnetzwerk (TN) mit Knoten (KNi), die zumindest zum Teil über Kanten (Ki) mit dem Quellknoten (Qe) und mit dem Zielknoten (ZF) verbunden sind,

   - bei dem jedem Knoten (KNi), dem Quellknoten (Qe) und dem Zielknoten (ZF) ein Potentialwert zugeordnet wird,
   - bei dem die Zuordnung derart erfolgt, daß dem Zielknoten (ZF) der niedrigste Potentialwert zugeordnet wird und beginnend mit dem Zielknoten (ZF) für alle Knoten folgende Verfahrensschritte durchgeführt werden:

     - - es wird ein Knoten (KNi) ausgewählt, dem noch kein Potentialwert zugeordnet wurde, und der mit mindestens einem Knoten (KNi) verbunden ist, dem ein Potentialwert zugeordnet wurde,
     - - dem ausgewählten Knoten (KNi) wird ein Potentialwert zugeordnet, der größer ist als der Potentialwert, der dem verbundenen Knoten (KNi) zugeordnet wurde, und

   - bei dem die Teil-Routing-Tabelle sich ergibt aus einer Menge von Knoten (KNi), die ausgehend von dem Quellknoten (Qe) über Knoten (KNi) mit monoton fallenden Potentialwerten zu dem Zielknoten (ZF) führen.

2. Verfahren nach Anspruch 1,
   bei dem das Telekommunikationsnetzwerk mehrere Quellknoten aufweist.

3. Verfahren nach Anspruch 1 oder 2,
   bei dem das Telekommunikationsnetzwerk mehrere Zielknoten aufweist.

4. Verfahren nach einem der Ansprüche 1 bis 3,

   - bei dem das Telekommunikationsnetzwerk mehrere Hierarchieebenen aufweist, die jeweils mindestens einen Knoten, Quellknoten oder Zielknoten aufweisen,
   - bei dem die Zuordnung hierarchieebenenweise erfolgt, ausgehend von dem Zielknoten zunächst bis zur obersten Hierarchieebene und anschließend zurück zur untersten Hierarchieebene.

5. Vorrichtung zur Generierung mindestens einer Teil-Routing-Tabelle zwischen mindestens einem Quellknoten (Qe) und mindestens einem Zielknoten (ZF) in einem Telekommunikationsnetzwerk (TN) mit Knoten (KNi), die zumindest zum Teil über Kanten (Ki) mit dem Quellknoten (Qe) und mit dem Zielknoten (ZF) verbunden sind,
   mit einer Prozessoreinheit (P), die derart eingerichtet ist, daß

   - jedem Knoten (KNi), dem Quellknoten (Qe) und dem Zielknoten (ZF) ein Potentialwert zugeordnet wird,
   - die Zuordnung derart erfolgt, daß dem Zielknoten (ZF) der niedrigste Potentialwert zugeordnet wird und beginnend mit dem Zielknoten (ZF) für alle Knoten folgende Verfahrensschritte durchgeführt werden:

     - - es wird ein knoten (KNi) ausgewählt, dem noch kein Potentialwert zugeordnet wurde, und der mit mindestens einem Knoten (KNi) verbunden ist, dem ein Potentialwert zugeordnet wurde,
     - - dem ausgewählten Knoten wird ein Potentialwert zugeordnet, der größer ist als der Potentialwert, der dem verbundenen Knoten (KNi) zugeordnet wurde, und

- die Teil-Routing-Tabelle sich ergibt aus einer Menge von Knoten, die ausgehend von dem Quellknoten (Qe) über Knoten (KNi) mit monoton fallenden Potentialwerten zu dem Zielknoten (ZF) führen.

**6.** Vorrichtung nach Anspruch 5,
bei der das Telekommunikationsnetzwerk mehrere Quellknoten aufweist.

**7.** Vorrichtung nach Anspruch 5 oder 6,
bei der das Telekommunikationsnetzwerk mehrere Zielknoten aufweist.

**8.** Vorrichtung nach einem der Ansprüche 5 bis 7,

- bei der das Telekommunikationsnetzwerk mehrere Hierarchieebenen aufweist, die jeweils mindestens einen Knoten, Quellknoten oder Zielknoten aufweisen, und
- bei der die Prozessoreinheit derart eingerichtet ist, daß die Zuordnung hierarchieebenenweise erfolgt, ausgehend von dem Zielknoten zunächst bis zur obersten Hierarchieebene und anschließend zurück zur untersten Hierarchieebene.

**Claims**

**1.** Method for computer-aided generation of at least one partial routing table between at least one source node (Qe) and at least one destination node (ZF) in a telecommunications network (TN) having nodes (KNi), at least some of which are connected via edges (Ki) to the source node (Qe) and to the destination node (ZF),

- in which a potential value is allocated to each node (KNi), to the source node (Qe) and to the destination node (ZF),
- in which the allocation is carried out such that the lowest potential value is allocated to the destination node (ZF) and, starting with the destination node (ZF), the following method steps are carried out for all the nodes:

  - - one node (KNi) is selected to which no potential value has yet been allocated and which is connected to at least one node (KNi) to which a potential value has been allocated,
  - - the selected node (KNi) is allocated a potential value which is greater than the potential value which is allocated to the connected node (KNi), and

- in which the partial routing table is obtained from a set of nodes (KNi) which, starting from the source node (Qe), lead via nodes (KNi) with monotonally falling potential values to the destination node (ZF).

**2.** Method according to Claim 1,
in which the telecommunications network has two or more source nodes.

**3.** Method according to Claim 1 or 2,
in which the telecommunications network has two or more destination nodes.

**4.** Method according to one of Claims 1 to 3,

- in which the telecommunications network has two or more hierarchy levels, which each have at least one node, one source node or one destination node,
- in which the allocation is based on hierarchical levels, starting first of all from the destination node up to the highest hierarchy level, and then back to the lowest hierarchy level.

**5.** Apparatus for generating at least one partial routing table between at least one source node (Qe) and at least one destination node (ZF) in a telecommunications network (TN) having nodes (KNi), at least some of which are connected via edges (Ki) to the source node (Qe) and to the destination node (ZF), having a processing unit (P) which is set out precisely

- a potential value is allocated to each node (KNi), to the source node (Qe) and to the destination node (ZF),
- the allocation is carried out such that the lowest potential value is allocated to the destination node (ZF) and, starting with the destination node (ZF), the following method steps are carried out for all the nodes:

- - one node (KNi) is selected to which no potential value has yet been allocated and which is connected to at least one node (KNi) to which a potential value has been allocated,
- - the selected node (KNi) is allocated a potential value which is greater than the potential value which is allocated to the connected node (KNi), and

- the partial routing table is obtained from a set of nodes (KNi) which, starting from the source node (Qe), lead via nodes (KNi) with monotonally falling potential values to the destination node (ZF).

**6.** Method according to Claim 5,
in which the telecommunications network has two or more source nodes.

**7.** Method according to Claim 5 or 6,
in which the telecommunications network has two or more destination nodes.

**8.** Method according to one of Claims 5 to 7,

- in which the telecommunications network has two or more hierarchy levels, which each have at least one node, one source node or one destination node,
- in which the processor unit is set up such that the allocation is based on hierarchical levels, starting first of all from the destination node up to the highest hierarchy level, and then back to the lowest hierarchy level.

**Revendications**

**1.** Procédé pour la génération, assistée par ordinateur, d'au moins une table de routage partielle entre au moins un noeud source (Qe) et au moins un noeud cible (Zf) dans un réseau de télécommunications (TN) avec des noeuds (KNi) reliés au moins en partie par l'intermédiaire d'arêtes (Ki) au noeud source (Qe) et au noeud cible (Zf), dans lequel

- une valeur de potentiel est affectée à chaque noeud (KNi), au noeud source (Qe) et au noeud cible (Zf),
- l'affectation se fait de manière telle que la valeur de potentiel la plus faible est affectée au noeud cible (Zf) et que, commençant par le noeud cible (Zf), les étapes suivantes sont exécutées pour tous les noeuds:
    - - sélection d'un noeud (KNi) auquel n'a encore été affectée aucune valeur de potentiel et lequel est relié à au moins un noeud (KNi) auquel a été affectée une valeur de potentiel,
    - - affectation, au noeud (KNi) sélectionné, d'une valeur de potentiel supérieure à la valeur de potentiel affectée au noeud (KNi) relié, et dans lequel

- la table de routage partielle résulte d'une quantité de noeuds (KNi) qui, partant du noeud source (Qe), conduisent au noeud cible (Zf) en passant par des noeuds (KNi) ayant des valeurs de potentiel en chute monotone.

**2.** Procédé selon la revendication 1, dans lequel le réseau de télécommunications présente plusieurs noeuds sources.

**3.** Procédé selon la revendication 1 ou 2, dans lequel le réseau de télécommunications présente plusieurs noeuds cibles.

**4.** Procédé selon l'une des revendications 1 à 3, dans lequel

- le réseau de télécommunications présente plusieurs niveaux hiérarchiques présentant chacun au moins un noeud, noeud source ou noeud cible et dans lequel
- l'affectation se fait par niveaux hiérarchiques en partant du noeud cible et en allant d'abord jusqu'au niveau hiérarchique le plus élevé pour revenir ensuite au niveau hiérarchique le plus bas.

**5.** Dispositif pour générer au moins une table de routage partielle entre au moins un noeud source (Qe) et au moins un noeud cible (Zf) dans un réseau de télécommunications (TN) avec des noeuds (KNi) reliés au moins en partie par l'intermédiaire d'arêtes (Ki) au noeud source (Qe) et au noeud cible (Zf), avec une unité de processeur (P) configurée de manière telle que

- une valeur de potentiel est affectée à chaque noeud (KNi), au noeud source (Qe) et au noeud cible (Zf),
- cette affectation se fait de manière telle que la valeur de potentiel la plus faible est affectée au noeud cible (Zf) et que, commençant par le noeud cible (Zf), les étapes suivantes sont exécutées pour tous les noeuds:

  - - sélection d'un noeud (KNi) auquel n'a encore été affectée aucune valeur de potentiel et lequel est relié à au moins un noeud (KNi) auquel a été affectée une valeur de potentiel;
  - - affectation, au noeud sélectionné, d'une valeur de potentiel supérieure à la valeur de potentiel affectée au noeud (KNi) relié, et que

- la table de routage partielle résulte d'une quantité de noeuds qui, partant du noeud source (Qe), conduisent au noeud cible (Zf) en passant par des noeuds (KNi) ayant des valeurs de potentiel en chute monotone.

**6.** Dispositif selon la revendication 5, dans lequel le réseau de télécommunications présente plusieurs noeuds sources.

**7.** Dispositif selon la revendication 5 ou 6, dans lequel le réseau de télécommunications présente plusieurs noeuds cibles.

**8.** Dispositif selon l'une des revendications 5 à 7, dans lequel

- le réseau de télécommunications présente plusieurs niveaux hiérarchiques présentant chacun au moins un noeud, noeud source ou noeud cible et dans lequel
- l'unité de processeur est configurée de manière telle que l'affectation se fait par niveaux hiérarchiques en partant du noeud cible et en allant d'abord jusqu'au niveau hiérarchique le plus élevé pour revenir ensuite au niveau hiérarchique le plus bas.

FIG 1

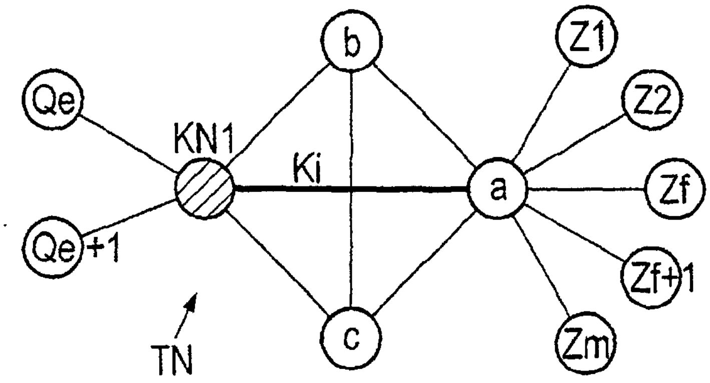


FIG 2

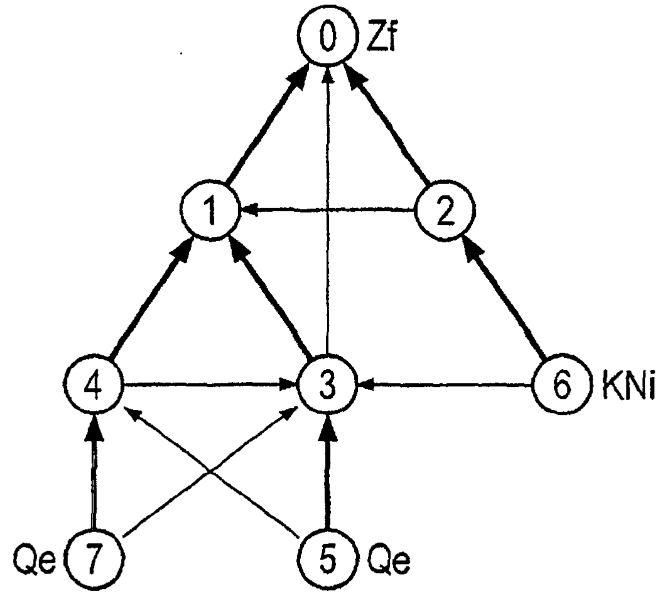


FIG 4

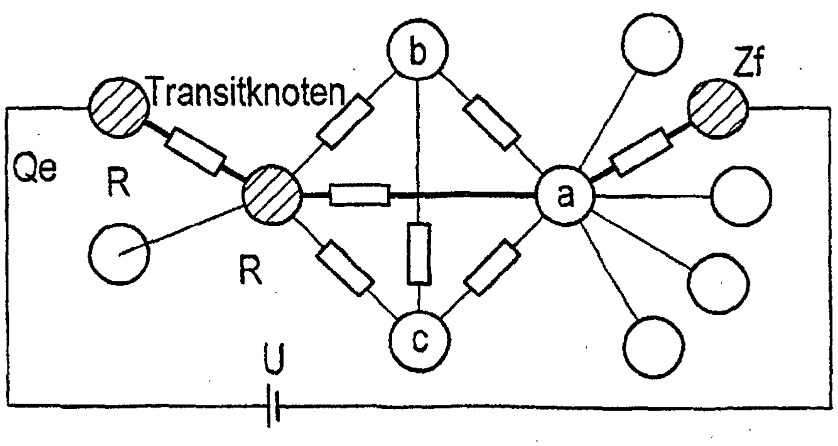

FIG 3

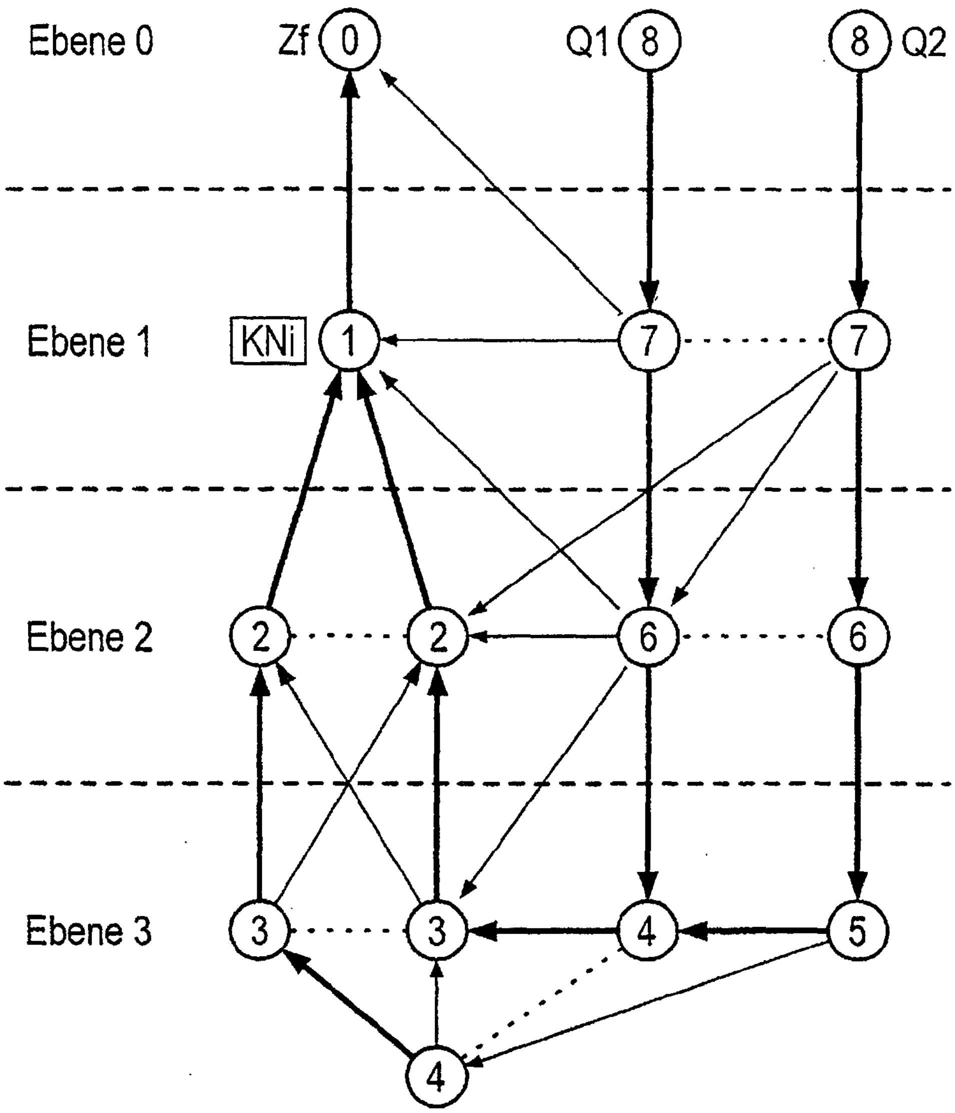
Ebene 0
Zf
0
Q1
8
8
Q2
Ebene 1
KNi
1
7
7
Ebene 2
2
2
6
6
Ebene 3
3
3
4
5
4

FIG 6

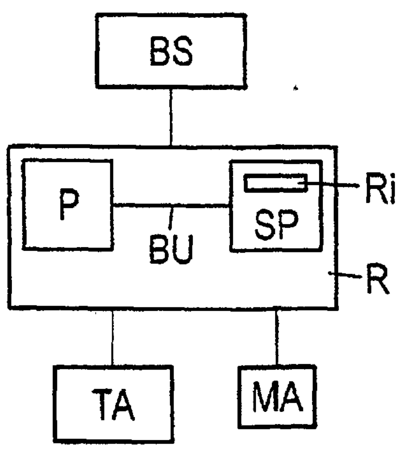
BS
P
SP
Ri
BU
R
TA
MA

FIG 6

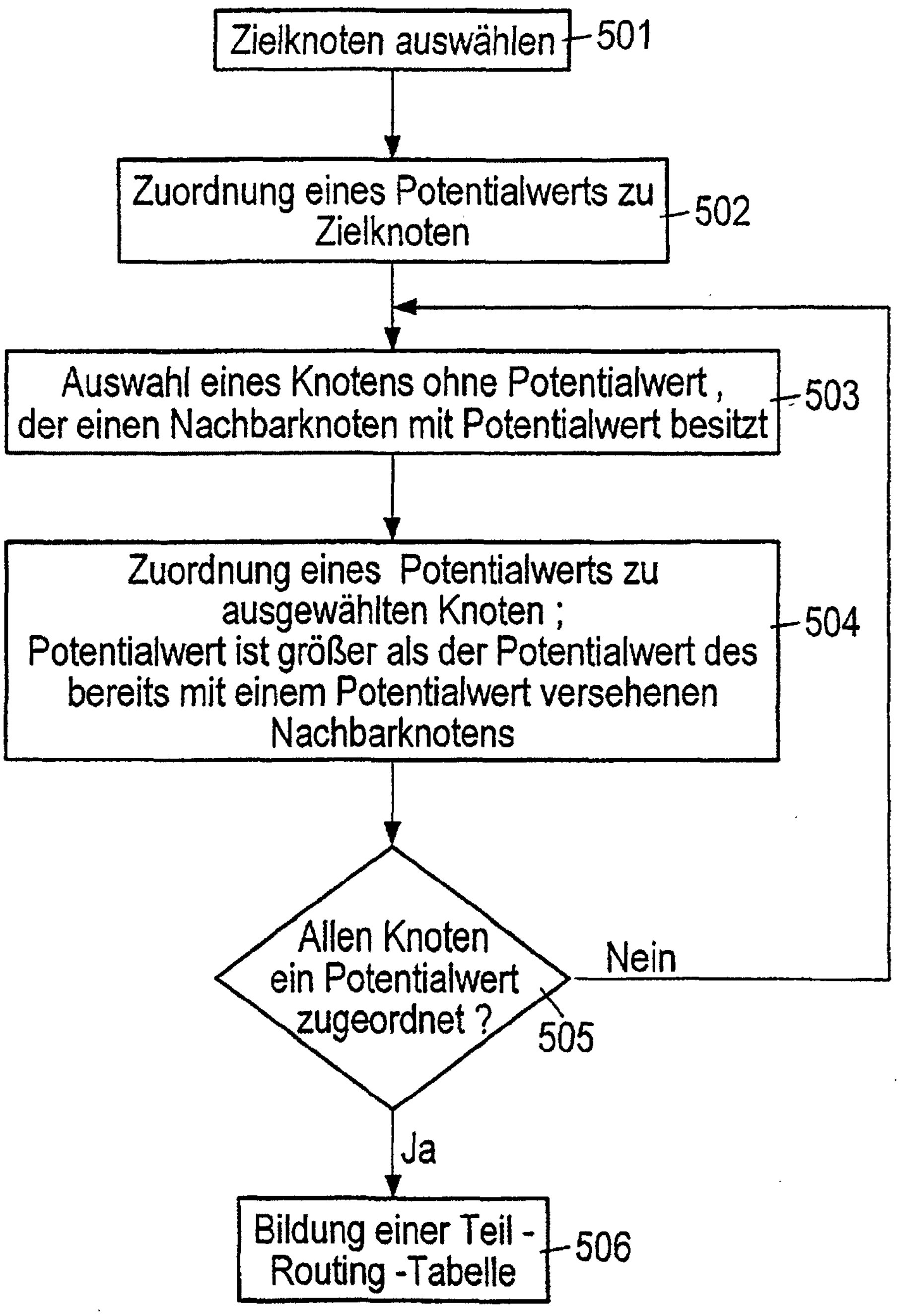
Zielknoten auswählen
501
Zuordnung eines Potentialwerts zu Zielknoten
502
Auswahl eines Knotens ohne Potentialwert, der einen Nachbarknoten mit Potentialwert besitzt
503
Zuordnung eines Potentialwerts zu ausgewählten Knoten ;
Potentialwert ist größer als der Potentialwert des bereits mit einem Potentialwert versehenen Nachbarknotens
504
Allen Knoten ein Potentialwert zugeordnet ?
Nein
505
Ja
Bildung einer Teil - Routing -Tabelle
506